# EUROPÄISCHE PATENTSCHRIFT

(11) **EP 3 288 816 B1**
(45) Veröffentlichungstag und Bekanntmachung des Hinweises auf die Patenterteilung: **10.06.2020**
(21) Anmeldenummer: 16717590.0
(22) Anmeldetag: 13.04.2016
(51) Int. Cl.: B62D 15/02

(54) **VORRICHTUNG UND VERFAHREN ZUM AUTOMATISIERTEN VALET PARKEN**
AUTOMATED VALET PARKING METHOD AND DEVICE
PROCÉDÉ ET DISPOSITIF DE SERVICE VOITURIER AUTOMATIQUE

(30) Priorität: 30.04.2015 DE 102015208068
(43) Veröffentlichungstag der Anmeldung: 07.03.2018
(73) Patentinhaber: Robert Bosch GmbH, 70442 Stuttgart (DE)
(72) Erfinder: NORDBRUCH, Stefan, 70806 Kornwestheim (DE); NICODEMUS, Rolf, 74321 Bietigheim-Bissingen (DE)
(86) Internationale Anmeldenummer: PCT/EP2016/058050
(87) Internationale Veröffentlichungsnummer: WO 2016/173836

(56) Entgegenhaltungen:
- WO-A1-2006/039830
- DE-A1-102008 027 692
- DE-A1-102011 118 551
- DE-A1-102012 222 562
- DE-A1-102013 200 493
- FR-A1- 2 815 921
- US-A1- 2004 233 036
- US-A1- 2010 156 672
- US-A1- 2012 188 100

## Beschreibung

Die Erfindung betrifft eine Technik zur Steuerung eines autonom agierenden Kraftfahrzeugs.

### Stand der Technik

Die Offenlegungsschrift DE 10 2012 222 562 A1 zeigt ein System für bewirtschaftete Parkflächen zur Überführung eines Fahrzeugs von einer Startposition in eine Zielposition.

Die Offenlegungsschrift WO 2006 / 039 830 A zeigt eine automatische Parkanlage bei der Fahrzeuge mittels Liftplattformen und Hub- und Schubsystemen bewegt werden können.

Die Offenlegungsschrift DE 10 2011 118 551 A1 zeigt ein Parkassistenzsystem, das bei Vorliegen einer Abbruchbedingung in einen sicheren Zustand überführt wird.

Bei einem sogenannten Automated Valet Parking ("AVP") wird ein Kraftfahrzeug von seinem Fahrer an einer Abgabestelle ("Drop Zone"), zum Beispiel vor einem Parkhaus, abgestellt, von wo aus es autonom in eine Parkposition bzw. auf dem umgekehrten Weg von dort zur Abgabestelle fährt. Befinden sich bei der autonomen Steuerung des Kraftfahrzeugs noch Personen im Kraftfahrzeug, so kann dies zu Problemen führen. Beispielsweise könnten die Personen während des Parkvorgangs das Kraftfahrzeug verlassen, wodurch sie einen Betrieb des Parkplatzes stören können. Insbesondere können diese Personen einen autonomen Valet Parking-Betrieb stören.

Andererseits kann es gewünscht sein, eine Person an Bord des sich autonom bewegenden Kraftfahrzeugs zu erlauben, beispielsweise aus Gründen der Systemüberprüfung oder weil ein autonom gesteuertes Kraftfahrzeug liegen geblieben ist und von einer Verkehrsfläche entfernt werden muss.

### Offenbarung der Erfindung

Der Erfindung liegt die Aufgabe zu Grunde, eine Technik zur verbesserten Steuerung eines Kraftfahrzeugs während des autonomen Fahrens im Rahmen eines Automated Valet Parking bereitzustellen. Die Erfindung löst diese Aufgabe mittels der Gegenstände der unabhängigen Ansprüche. Unteransprüche geben bevorzugte Ausführungsformen an.

Nach einem Aspekt umfasst ein Verfahren zum Steuern eines automatisierten Parkbetriebs, bei dem ein Kraftfahrzeug auf einer Strecke zwischen einer Übergabestelle und einem Abstellplatz autonom gesteuert wird, Schritte des Erfassens, dass sich während eines autonomen Fahrvorgangs eine Person an Bord des Kraftfahrzeugs befindet, des Bestimmens, dass für den Transport der Person auf der Fahrt keine Erlaubnis vorliegt, und des Durchführens einer oder mehrerer Aktionen, wobei der Transport der Person auf eine Anforderung hin erlaubt werden kann, wobei die Anforderung nur dann abgelehnt wird, wenn eine Verkehrssituation im Bereich des Parkbetriebs als gefährlich eingestuft wird.

Nach einem weiteren Aspekt umfasst eine Vorrichtung zum Steuern eines automatisierten Parkbetriebs, bei dem ein Kraftfahrzeug auf einer Strecke zwischen einer Übergabestelle und einem Abstellplatz autonom gesteuert wird, eine Überprüfungseinrichtung zum Überprüfen, ob sich im Innenraum des Kraftfahrzeugs eine Person befindet, eine Bestimmungseinrichtung zur Bestimmung, dass für den Transport der Person auf der Fahrt keine Erlaubnis vorliegt, und eine Steuerungseinrichtung zum Steuern von einer oder mehreren Aktionen, wobei die Vorrichtung eingerichtet ist, das erfindungsgemäße Verfahren durchzuführen.

Nach noch einem weiteren Aspekt umfasst ein Computerprogrammprodukt Programmcodemittel zur Durchführung des Verfahrens nach einem der vorangehenden Ansprüche, wenn das Computerprogrammprodukt auf einer Verarbeitungseinrichtung ausgeführt wird oder auf einem computerlesbaren Datenträger gespeichert ist.

Der Erfindung liegt der Gedanke zugrunde, dass der Transport einer Person an Bord eines autonom agierenden Kraftfahrzeugs im Rahmen eines automatisierten Parkbetriebs nicht notwendigerweise einen Umstand darstellt, der nicht toleriert werden kann. Vielmehr wird vorgeschlagen in möglichst flexibler Weise auf den Vorgang zu reagieren. Insbesondere wird vorgeschlagen, den Transport der Person an Bord des Kraftfahrzeugs auf Anfrage bzw. Anforderung zu erlauben.

Dazu kann bereits vor dem Fahrvorgang eine Anforderung zur Erteilung einer Erlaubnis erfasst werden. Die Anforderung kann beispielsweise von einer Person an Bord des Kraftfahrzeugs mittels eines Smartphones und einer entsprechenden Datenverbindung zu einer Steuervorrichtung für den Parkbetrieb abgesetzt werden. Die oben genannten Verfahrensschritte werden nur dann angewendet, wenn die Anforderung abgelehnt wird.

In einer weiteren Ausführungsform kann es auch ermöglicht werden, die Erlaubnis zu einem späteren Zeitpunkt anzufordern. Insbesondere kann nach dem Erfassen, dass sich eine Person an Bord des Kraftfahrzeugs befindet, eine Kommunikationsverbindung zu der Person im Kraftfahrzeug hergestellt werden, beispielsweise über einen innerhalb oder außerhalb des Kraftfahrzeugs angebrachten Lautsprecher, eine Telefonverbindung oder eine Datenverbindung zum Kraftfahrzeug selbst oder einem Gerät der Person, etwa einem Smartphone. Die Person hat dann Gelegenheit, zu diesem verspäteten Zeitpunkt eine Anforderung zur Erteilung der Erlaubnis abzugeben. Nur wenn diese Erlaubnis abgelehnt wird, handelt es sich um einen nicht autorisierten Transport der Person und eine der oben angedeuteten Aktionen kann durchgeführt werden.

In beiden Varianten des Empfangens einer Anforderung zur Erteilung einer Erlaubnis kann die Anforderung nur dann abgelehnt werden, wenn eine Verkehrssituation im Bereich des Parkbetriebs als gefährlich eingestuft wird. Ist beispielsweise ein anderes Kraftfahrzeug im Bereich des Kraftfahrzeugs mit der Person unterwegs, so kann dies bereits als gefährlich eingestuft werden. Auch ein insgesamt hohes Verkehrsaufkommen im Bereich des Parkbetriebs kann als gefährlich gelten. Liegt keine Gefahr vor, so kann der Person die Mitfahrt gestattet werden. In einer weiteren Variante kann auch dafür gesorgt werden, dass die Verkehrssituation ungefährlich ist, bevor der Anforderung stattgegeben wird. Dazu kann beispielsweise abgewartet werden, bis ein autonomer Fahrvorgang eines anderen Kraftfahrzeugs abgeschlossen ist.

Es sind unterschiedliche Aktionen möglich, die auch miteinander kombiniert werden können. Beispielsweise kann ein Steuerungsziel des Kraftfahrzeugs geändert werden. Dazu kann das Kraftfahrzeug dazu angewiesen werden, anzuhalten. In einer weiteren Ausführungsform kann das Kraftfahrzeug auf einen anderen Abstellplatz umgeleitet werden, von dem aus beispielsweise ein Aussteigen gefahrlos möglich ist. Auf diese Weise kann das Kraftfahrzeug auch aus dem automatisierten Parkbetrieb entfernt werden. In noch einer weiteren Ausführungsform kann eine Infrastrukturkomponente, die einen Fahrweg des Kraftfahrzeugs steuert, also beispielsweise eine Ampel, eine Schranke oder eine dynamische Verkehrsführung, dazu angesteuert werden, den Weg des Kraftfahrzeugs zu blockieren und/oder auf den oben beschriebenen anderen Abstellplatz umzuleiten.

Es kann auch ein Warnhinweis ausgegeben werden, wenn das Befördern der Person im autonomen Betrieb des Kraftfahrzeugs bestimmt wurde. Der Warnhinweis kann insbesondere an eine Person an Bord des Kraftfahrzeugs gerichtet sein und beispielsweise mittels eines Infrastrukturelements wie eines Hinweisschildes, eines Warnlichts oder Blinklichts oder einer Lautsprecherdurchsage erfolgen. Der Warnhinweis kann auch durch ein Kommunikationsmittel an Bord des Kraftfahrzeugs ausgegeben werden, beispielsweise eine Freisprechanlage oder ein Smartphone der Person. Durch den Warnhinweis kann der Person kenntlich gemacht werden, dass ihr Mitfahren nicht erwünscht bzw. nicht erlaubt ist. Dies gilt insbesondere dann, wenn die Person in die automatische Steuerung des Kraftfahrzeugs eingreift oder das Kraftfahrzeug selbst führt. Der Warnhinweis kann in Form einer konkreten Handlungsanweisung, etwa zum Anhalten des Kraftfahrzeugs, gegeben werden. In einer weiteren Ausführungsform kann ein Personal im Bereich des automatisierten Parkbetriebs dazu beauftragt werden, die Situation zu klären. Dazu kann das Personal aufgefordert werden, das Kraftfahrzeug persönlich aufzusuchen und gegebenenfalls die Personalien der Person zu überprüfen und/oder die Person vom Bereich des automatisierten Parkbetriebs zu geleiten. In noch einer weiteren Ausführungsform kann der Warnhinweis an die Person in dem Kraftfahrzeug ausgegeben werden, beispielsweise über eine bordeigene Informationskomponente, ein mobiles Gerät wie ein Smartphone oder eines der genannten Infrastrukturelemente.

In noch einer weiteren Variante kann die Aktion ein Ändern eines Steuerungsziels eines anderen Kraftfahrzeugs im Bereich des Parkbetriebs umfassen. Dadurch kann auch die vorbestimmte Strecke verändert werden. Das Kraftfahrzeug kann so in eine sichere Position oder aus einem Bereich bewegt werden, in dem AVP-Kraftfahrzeuge fahren können. In einer Variante kann der gesamte Verkehrsfluss umgeplant werden, sodass beispielsweise alle in einem vorbestimmten Umkreis um das Kraftfahrzeug oder im gesamten Parksystem fahrenden anderen Kraftfahrzeuge gestoppt oder umgeleitet werden.

Liegt keine Erlaubnis vor, kann das Kraftfahrzeug auch zum Anhalten angesteuert werden. Dazu kann direkt in die Steuerung des Kraftfahrzeugs eingegriffen werden, beispielsweise indem eine entsprechende Anweisung an das Kraftfahrzeug übermittelt wird. Die Strecke kann mittels einer fahrwegsteuernden Infrastrukturkomponente verändert oder blockiert werden. Eine solche Komponente kann beispielsweise eine Schranke, eine Ampel oder eine ähnliche Einrichtung umfassen.

Die Erfindung wird nun mit Bezug auf die beigefügten Figuren genauer beschrieben, in denen
- Fig. 1: ein Parksystem zum automatischem Valet Parken; und
- Fig. 2: ein Ablaufdiagramm eines Verfahrens zum Steuern des Parksystems von Fig. 1
darstellt.

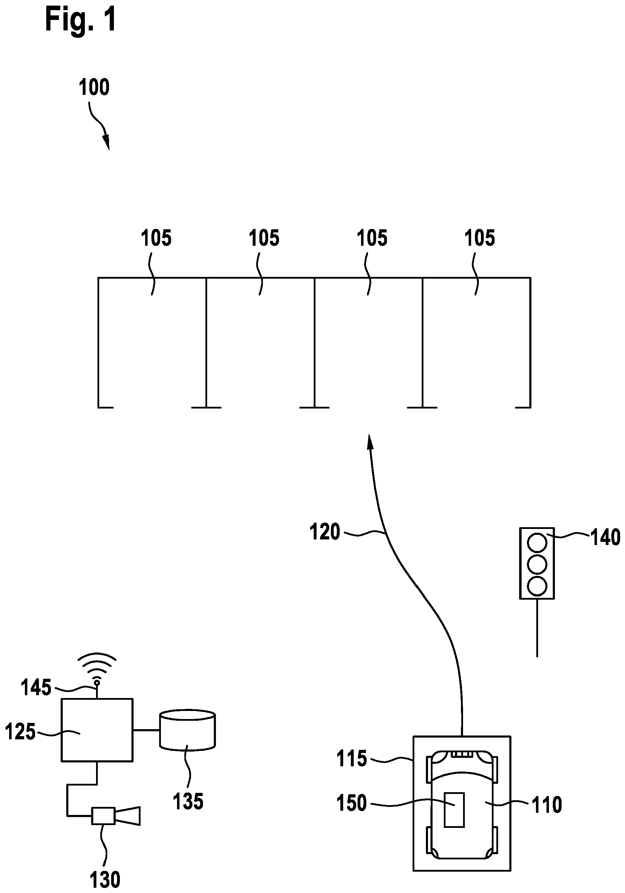

Fig. 1 zeigt ein Parksystem 100 zum automatischen Valet Parken (AVP). Das Parksystem 100 umfasst einen oder mehrere Abstellplätze 105, auf denen jeweils ein Kraftfahrzeug 110 abgestellt werden kann. Dazu führt ein Fahrer das Kraftfahrzeug 110 zu einer Abgabestelle 115 und verlässt das Kraftfahrzeug 110. Das Kraftfahrzeug 110 fährt dann autonom auf einer Strecke 120 zu einem vorbestimmten Abstellplatz 105. Welcher Abstellplatz 105 für das Kraftfahrzeug 110 vorbestimmt ist und gegebenenfalls auch die Führung der Strecke 120 wird mittels einer Steuervorrichtung 125, die vom Parksystem 100 umfasst ist, bestimmt. Möchte der Fahrer sein Kraftfahrzeug 110 wieder benützen, so wird es in entsprechender Weise vom Abstellplatz 105 autonom zur Abgabestelle 115 zurückgeführt, wo der Fahrer das Kraftfahrzeug 110 übernehmen kann.

Ein vollständiger AVP-Parkvorgang kann das Fahren von der Abgabestelle 115 zum Abstellplatz 105, ein Einparken und ein Abstellen des Kraftfahrzeugs 110 umfassen. In umgekehrter Richtung kann ein vollständiger AVP-Abholvorgang ein Starten des Kraftfahrzeugs 110, ein Ausparken und ein autonomes Fahren zur Abgabestelle 115 umfassen. In einer weiteren Variante werden keine vollständigen, sondern nur teilweise Park- bzw. Abholvorgänge durchgeführt, wobei auf jeden Fall ein autonomes Fahren des Kraftfahrzeugs 110 umfasst ist.

Zum autonomen Führen des Kraftfahrzeugs 110 auf der Strecke 120 sind unterschiedliche Herangehensweisen bekannt. In einer ersten Ausführungsform wird das Kraftfahrzeug 110 durch eine Steuereinrichtung 135 gesteuert, die Teil des Parksystems 100 und außerhalb des Kraftfahrzeugs 110 angebracht ist. Die Steuereinrichtung 135 kann eine Kommunikationseinrichtung 145 aufweisen, mittels derer sie mit dem Kraftfahrzeug 110 in Kontakt tritt. Die Kommunikationseinrichtung 140 ist bevorzugterweise drahtlos ausgeführt und kann Bluetooth, WLAN oder einen mobilen Datenfunk umfassen. Zur Überwachung des Kraftfahrzeugs 110 können eine oder mehrere

Überprüfungseinrichtungen 130 vorgesehen sein, beispielsweise eine Kamera, eine Lichtschranke, ein Entfernungsmesser oder ein anderes Gerät.

In einer zweiten Ausführungsform fährt das Kraftfahrzeug 110 auf der Basis von Informationen, die es von der Steuereinrichtung 135 empfängt, wobei die Steuereinrichtung 135 den Fahrablauf des Kraftfahrzeugs 110 auf der Strecke 120 aktiv unterstützt. Diese Ausführungsform wird auch als kooperative Infrastruktur bezeichnet.

In einer dritten Ausführungsform fährt das Kraftfahrzeug 110 ausschließlich auf der Basis vorbestimmter Daten, beispielsweise einem Lageplan des Parkplatzes 105 und einer Position eines anzusteuernden Abstellplatzes 105 auf der Strecke 120.

Alle drei Ausführungsformen werden im Vorliegenden unter der Bezeichnung Autonomes Steuern des Kraftfahrzeugs zusammengefasst.

Zur Sicherstellung eines reibungslosen Betriebs ist allgemein nicht erwünscht, dass sich während des autonomen Fahrens des Kraftfahrzeugs 110 eine Person an Bord befindet. Um dies zu überprüfen, kann eine Überprüfungseinrichtung 130 vorgesehen sein. Diese kann an Bord des Kraftfahrzeugs 110 vorgesehen sein und beispielsweise einen Fahrzeugsensor wie eine Innenraumkamera oder einen Sitzbelegungssensor umfassen. Alternativ oder zusätzlich kann die Überprüfungseinrichtung 130 auch außerhalb des Kraftfahrzeugs 110 angebracht sein und beispielsweise eine Kamera im Bereich des Parksystems 100, insbesondere an der Abgabestelle 115, umfassen. Es sind auch mehrere Überprüfungseinrichtungen 130 möglich, die an unterschiedlichen Orten angebracht sein können.

Wird festgestellt, dass das Kraftfahrzeug 110 dabei oder im Begriff ist, im Bereich des Parksystems 100 mit einer Person an Bord zu fahren, so kann dies unter bestimmten Umständen jedoch auch toleriert werden. Beispielsweise kann zu Test- oder Sicherheitszwecken ein Techniker oder Administrator im Kraftfahrzeug 110 befördert werden. Das Befördern einer Person kann auch gestattet werden, um das Vertrauen des Fahrers oder eines seiner Passagiere in das Parksystem 100 zu vergrößern.

Es wird vorgeschlagen, eine diesbezügliche Berechtigung zur Personenbeförderung auf Anforderung, gegebenenfalls unter Beachtung von Nebenbedingungen, zu erteilen. Die Anforderung wird üblicherweise von einer Person an Bord des Kraftfahrzeugs 110 an die Steuervorrichtung 125 gestellt. Dies kann insbesondere bereits vor dem Abstellen des Kraftfahrzeugs 110 auf der Abgabestelle 115 erfolgen. In einer Ausführungsform kann die Anforderung auch noch früher, beispielsweise im Rahmen eines Reservierungsvorgangs für einen Abstellplatz 105 gestellt werden. Wird die Anforderung positiv beschieden, so kann ein entsprechender Hinweis durch die Steuervorrichtung 125 in einem Speicher 135 abgelegt werden und die anfordernde Person kann von dem positiven Bescheid unterrichtet werden.

Wird eine autonome Fahrt des Kraftfahrzeugs 110 mit einer Person an Bord erfasst, so können bei vorliegender Erlaubnis weitere Aktionen, die zum Zweck haben, die unerlaubte Personenbeförderung zu unterbinden, ausbleiben. Andernfalls können eine oder mehrere Maßnahmen ergriffen werden, um die Sicherheit des Parksystems 100, der Person an Bord des Kraftfahrzeugs 110 und des Kraftfahrzeugs 110 selbst sicherzustellen. Zu den möglichen Aktionen können das Ausgeben eines Hinweises oder einer Warnung, das Beeinflussen des Steuerungsziels des Kraftfahrzeugs 110 und das Ändern eines Steuerungsziels eines anderen Kraftfahrzeugs 110 im Bereich des Parksystems 100 zählen. Der Warnhinweis kann in einer Ausführungsform direkt an einen Insassen des Kraftfahrzeugs 110 gerichtet sein. Dazu kann der Warnhinweise über eine fahrzeugeigene Komponente ausgegeben werden, beispielsweise ein Unterhaltungssystem, ein Informationssystem oder ein mit dem Kraftfahrzeug vernetztes Smartphone. In einer anderen Ausführungsform kann der Warnhinweis auch an ein Personal ausgegeben werden, um dieses zu veranlassen, sich um den Vorgang geeignet zu kümmern.

Zur Unterstützung einer der Aktionen kann eine Infrastruktur 140 des Parksystems 100 genutzt werden, das beispielsweise eine Ampel, eine Schranke, ein Verkehrsleitsystem, eine Lautsprecheranlage, ein Licht, ein Blinklicht oder ein anderes Element umfasst, das im Bereich des Parksystems 100 fest oder beweglich angebracht ist. In einer weiteren Ausführungsform kann die Kommunikationseinrichtung 145 zur direkten Kommunikation mit dem Kraftfahrzeug 110 oder mit der Person im Kraftfahrzeug 110 eingerichtet sein. Beispielsweise kann ein fest installiertes oder mobiles Gerät 150, etwa ein Smartphone, an Bord des Kraftfahrzeugs 110 vorgesehen sein und die Steuervorrichtung 125 kann über die Kommunikationseinrichtung 145 das mobile Gerät 150 ansprechen.

Es ist insbesondere bevorzugt, dass die Erlaubnis zur Beförderung der Person auf der Strecke 120 auch dann noch angefordert werden kann, wenn die Personenbeförderung bereits detektiert wurde. In diesem Fall kann mit der Person an Bord des Kraftfahrzeugs 110 Kontakt aufgenommen werden, um festzustellen, ob diese eine solche Anforderung abgeben möchte. Ist dies der Fall, so kann die Anforderung bearbeitet und positiv oder negativ beschieden werden. Wird sie positiv beschieden, so können weitere Aktionen unterbleiben. Möchte die Person keine Anforderung zur Erlaubnis ihrer Beförderung stellen, so kann eine der erwähnten Aktionen ausgelöst werden.

Beim Bearbeiten einer Anforderung ist bevorzugt, dass die Anforderung nur dann negativ beschieden wird, also keine Erlaubnis erteilt wird, wenn der Betrieb des Parksystems 100 ein Risiko für die Person darstellen könnte. Das Erteilen der Erlaubnis nach Empfangen der Anforderung kann insbesondere daran gebunden sein, dass eine Verkehrssituation im Bereich des Parksystems 100 bewertet und als sicher eingestuft wird. Dazu kann insbesondere ein Verkehrsfluss im gesamten Parksystem 100 oder ein Verkehrsfluss im Bereich des Kraftfahrzeugs 110 zugrunde gelegt werden.

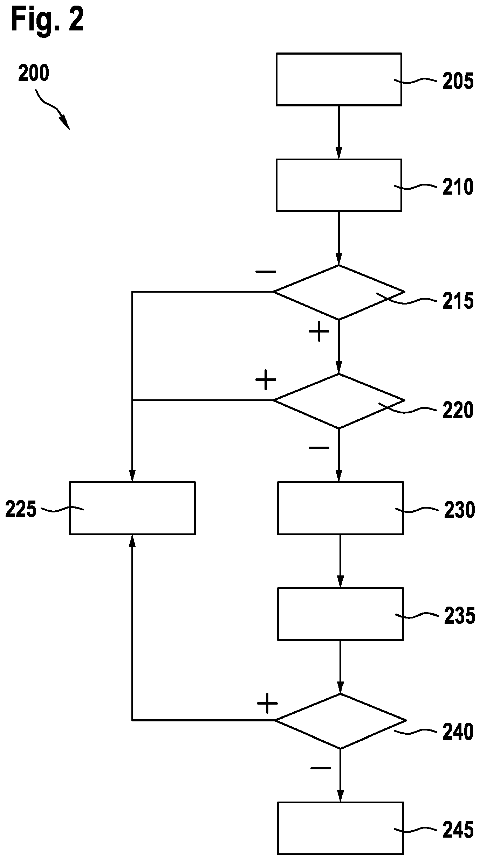

Fig. 2 zeigt ein Ablaufdiagramm eines Verfahrens 200 zur Steuerung eines automatisierten Parkbetriebs im Parksystem 100. Das Verfahren 200 kann insbesondere auf der Steuervorrichtung 125 ausgeführt werden.

In einem optionalen Schritt 205 wird eine Anforderung zur Erteilung der Erlaubnis der Beförderung einer Person während einer autonomen Fahrt des Kraftfahrzeugs 110 auf der Strecke 120 zwischen der Abgabestelle 115 und einem Abstellplatz 105 empfangen. In diesem Fall kann in einem Schritt 210 bestimmt werden, ob die Erlaubnis erteilt wird oder nicht. Ein Ergebnis der Entscheidung kann an die anfragende Stelle oder Person, das Kraftfahrzeug 110 und/oder den Speicher 135 weitergeleitet werden.

Befindet sich das Kraftfahrzeug 110 auf einer autonomen Fahrt auf der Strecke 120 oder steht die autonome Fahrt unmittelbar bevor, so wird in einem Schritt 215 bestimmt, ob es sich um eine Passagierfahrt handelt. Ist dies der Fall, so wird in einem Schritt 220 überprüft, ob eine entsprechende Erlaubnis vorliegt. Ist dies der Fall oder wurde im Schritt 215 bestimmt, dass es sich um keine Passagierfahrt handelt, so kann das Verfahren 200 in einen Zustand 225 übergehen, aus dem heraus keine weitere Aktion bezüglich der autonomen Fahrt des Kraftfahrzeugs 110 auf der Strecke 120 durchgeführt wird.

Liegt hingegen keine Erlaubnis vor, so kann in einem Schritt 230 eine Kommunikation zwischen der Steuervorrichtung 125 und der Person im Kraftfahrzeug 110 hergestellt werden. Dazu können die Infrastruktur 140 oder über die Kommunikationseinrichtung 145 das Kraftfahrzeug 110 bzw. das Gerät 150 an Bord des Kraftfahrzeugs 110 verwendet werden. In einem optionalen Schritt 235 kann geklärt werden, ob die Person tatsächlich eine Anforderung stellen möchte, während der autonomen Fahrt des Kraftfahrzeugs 110 an Bord zu bleiben. In diesem Fall kann in einem Schritt 240 analog dem Schritt 210 bestimmt werden, ob die Erlaubnis erteilt werden kann oder verweigert werden muss. Wird die Erlaubnis erteilt, so kann das Verfahren 200 in den Schritt 225 übergehen. Andernfalls können in einem Schritt 245 eine oder mehrere Aktionen eingeleitet werden, um auf die Passagierfahrt zu reagieren.

## Patentansprüche

1. Verfahren (200) zum Steuern eines automatisierten Parkbetriebs (100), bei dem ein Kraftfahrzeug (110) auf einer Strecke (120) zwischen einer Übergabestelle (115) und einem Abstellplatz (105) autonom gesteuert wird, wobei das Verfahren (200) folgende Schritte umfasst:
a) Erfassen (215), dass sich während eines autonomen Fahrvorgangs eine Person an Bord des Kraftfahrzeugs (110) befindet;
b) Bestimmen (220), dass für den Transport der Person auf der Fahrt keine Erlaubnis vorliegt; und
c) Durchführen (245) einer oder mehrerer Aktionen;
wobei der Transport der Person auf eine Anforderung hin erlaubt werden kann, wobei die Anforderung nur dann abgelehnt wird, wenn eine Verkehrssituation im Bereich des Parkbetriebs (100) als gefährlich eingestuft wird.

2. Verfahren (200) nach Anspruch 1, wobei ein Erfassen (205) der Anforderung zur Erteilung einer Erlaubnis und ein Ablehnen (210) der Anforderung vor Schritt a) erfolgen.

3. Verfahren (200) nach Anspruch 1, wobei ein Herstellen (230) einer Kommunikationsverbindung zu der Person, ein Erfassen (235), von der Person, einer Anforderung zur Erteilung einer Erlaubnis und ein Ablehnen (240) der Anforderung zwischen den Schritten b) und c) ausgeführten werden.

4. Verfahren (200) nach einem der vorangehenden Ansprüche, wobei die Aktion ein Ändern (245) des Steuerungsziels des Kraftfahrzeugs (110) umfasst.

5. Verfahren (200) nach einem der vorangehenden Ansprüche, wobei die Aktion ein Ausgeben (245) eines Warnhinweises umfasst.

6. Verfahren (200) nach einem der vorangehenden Ansprüche, wobei die Aktion ein Ändern (245) eines Steuerungsziels eines anderen Kraftfahrzeugs (110) im Bereich des Parkbetriebs (100) umfasst.

7. Verfahren (200) nach einem der vorangehenden Ansprüche, wobei das Kraftfahrzeug (110) zum Anhalten angesteuert wird, wenn keine Erlaubnis vorliegt.

8. Verfahren (200) nach einem der vorangehenden Ansprüche, wobei die Strecke (120) mittels einer fahrwegsteuernden Infrastrukturkomponente verändert oder blockiert wird, wenn keine Erlaubnis vorliegt.

9. Verfahren (200) nach einem der vorhergehenden Ansprüche, wobei das Erteilen der Erlaubnis daran gebunden ist, dass die Verkehrssituation im Bereich des Parksystems (100) bewertet und als sicher eingestuft wird.

10. Verfahren nach Anspruch 9, wobei der Bewertung ein Verkehrsfluss im Bereich des Parksystems (100) zugrunde gelegt wird.

11. Verfahren nach Anspruch 9, wobei der Bewertung ein Verkehrsfluss im Bereich des Fahrzeugs (110) zugrunde gelegt wird

12. Computerprogrammprodukt, umfassend Programmcodemittel zur Durchführung des Verfahrens (200) nach einem der vorangehenden Ansprüche, wenn das Computerprogrammprodukt auf einer Verarbeitungseinrichtung (125) ausgeführt wird oder auf einem computerlesbaren Datenträger gespeichert ist.

13. Vorrichtung (125) zum Steuern eines automatisierten Parkbetriebs (100), bei dem ein Kraftfahrzeug (110) auf einer Strecke (120) zwischen einer Übergabestelle (115) und einem Abstellplatz (105) autonom gesteuert wird, wobei die Vorrichtung (125) folgendes umfasst:
- eine Überprüfungseinrichtung (130) zum Überprüfen, ob sich im Innenraum des Kraftfahrzeugs (110) eine Person befindet;
- eine Bestimmungseinrichtung (135) zur Bestimmung, dass für den Transport der Person auf der Fahrt keine Erlaubnis vorliegt, und
- eine Steuerungseinrichtung (125) zum Steuern von einer oder mehreren Aktionen;
und wobei die Steuerungseinrichtung eingerichtet ist, eines der Verfahren der Ansprüche 1 bis 11 durchzuführen.

## Claims

1. Method (200) for controlling an automated parking operation (100), in which a motor vehicle (110) is controlled autonomously on a route (120) between a handover point (115) and a parking space (105), wherein the method (200) comprises the following steps:
a) recording (215) the fact that a person is on board the motor vehicle (110) during an autonomous driving procedure;
b) determining (220) that there is not permission to transport the person on the journey; and
c) performing (245) one or more actions;
wherein transporting the person may be permitted upon a request, wherein the request is rejected only when a traffic situation in the region of the parking operation (100) is classified as hazardous.

2. Method (200) according to Claim 1, wherein the request to grant permission is recorded (205) and the request is rejected (210) before step a).

3. Method (200) according to Claim 1, wherein a communication connection is set up (230) with the person, a request from the person to grant permission is recorded (235) and the request is rejected (240) between steps b) and c).

4. Method (200) according to one of the preceding claims, wherein the action comprises changing (245) the steering target of the motor vehicle (110).

5. Method (200) according to one of the preceding claims, wherein the action comprises outputting (245) a warning indication.

6. Method (200) according to one of the preceding claims, wherein the action comprises changing (245) a steering target of another motor vehicle (110) in the region of the parking operation (100).

7. Method (200) according to one of the preceding claims, wherein the motor vehicle (110) is driven to a stop if there is not permission.

8. Method (200) according to one of the preceding claims, wherein the route (120) is changed or blocked by way of an infrastructure component that controls the roadway if there is not permission.

9. Method (200) according to one of the preceding claims, wherein granting permission is linked to the traffic situation in the region of the parking system (100) being evaluated and classified as safe.

10. Method according to Claim 9, wherein a traffic flow in the region of the parking system (100) is used as a basis for the evaluation.

11. Method according to Claim 9, wherein a traffic flow in the region of the vehicle (110) is used as a basis for the evaluation.

12. Computer program product comprising program code means for performing the method (200) according to one of the preceding claims when the computer program product is executed on a processing apparatus (125) or is stored on a computer-readable data carrier.

13. Device (125) for controlling an automatic parking operation (100), in which a motor vehicle (110) is controlled autonomously on a route (120) between a handover point (115) and a parking space (105), wherein the device (125) comprises the following:
- a checking apparatus (130) for checking whether a person is inside the motor vehicle (110);
- a determination apparatus (135) for determining that there is not permission to transport the person on the journey, and
- a control apparatus (125) for controlling one or more actions;
and wherein the control apparatus is configured so as to perform one of the methods of Claims 1 to 11.

## Revendications

1. Procédé (200) pour commander un parc de stationnement automatisé (100), lors duquel un véhicule automobile (110) est commandé de manière autonome sur un parcours (120) entre un point de transfert (115) et un emplacement d'arrêt (105), le procédé (200) comprenant les étapes suivantes :
a) détection (215) du fait qu'une personne se trouve à bord du véhicule automobile (110) pendant une opération de déplacement autonome ;
b) détermination (220) qu'il n'existe aucune autorisation pour le transport de la personne sur le parcours ; et
c) accomplissement (245) d'une ou plusieurs actions ; le transport de la personne pouvant être autorisé suite à une demande, la demande n'étant rejetée que lorsqu'une situation de trafic dans la zone du parc de stationnement (100) est classifiée comme dangereuse.

2. Procédé (200) selon la revendication 1, une acquisition (205) de la demande d'accorder une autorisation et un rejet (210) de la demande ayant lieu avant l'étape a).

3. Procédé (200) selon la revendication 1, un établissement (230) d'une liaison de communication avec la personne, une acquisition (235), de la part de la personne, d'une demande d'accorder une autorisation et un rejet (240) de la demande étant effectués entre les étapes b) et c).

4. Procédé (200) selon l'une des revendications précédentes, l'action comprenant une modification (245) de la destination de commande du véhicule automobile (110).

5. Procédé (200) selon l'une des revendications précédentes, l'action comprenant une délivrance (245) d'une notification d'avertissement.

6. Procédé (200) selon l'une des revendications précédentes, l'action comprenant une modification (245) d'une destination de commande d'un autre véhicule automobile (110) dans la zone du parc de stationnement (100) .

7. Procédé (200) selon l'une des revendications précédentes, le véhicule automobile (110) étant commandé pour s'arrêter en l'absence d'une autorisation.

8. Procédé (200) selon l'une des revendications précédentes, le parcours (120), en l'absence d'une autorisation, étant modifié ou bloqué au moyen d'un composant d'infrastructure qui contrôle la trajectoire de déplacement.

9. Procédé (200) selon l'une des revendications précédentes, l'accord de l'autorisation étant lié au fait que la situation de trafic dans la zone du système de stationnement (100) est évaluée et classifiée comme étant sûre.

10. Procédé selon la revendication 9, l'évaluation se basant sur un flux de trafic dans la zone du système de stationnement (100).

11. Procédé selon la revendication 9, l'évaluation se basant sur un flux de trafic dans la zone du véhicule automobile (110).

12. Produit de programme informatique, comprenant des moyens de code de programme destinés à mettre en œuvre le procédé (200) selon l'une des revendications précédentes lorsque le produit de programme informatique est exécuté sur un dispositif de traitement (125) ou est enregistré sur un support de données lisible par ordinateur.

13. Arrangement (125) pour commander un parc de stationnement automatisé (100), avec lequel un véhicule automobile (110) est commandé de manière autonome sur un parcours (120) entre un point de transfert (115) et un emplacement d'arrêt (105), l'arrangement (125) comprenant les éléments suivantes :
- un dispositif de vérification (130) destiné à vérifier si une personne se trouve dans l'habitacle du véhicule automobile (110) ;
- un dispositif de détermination (135) destiné à déterminer qu'il n'existe aucune autorisation pour le transport de la personne sur le parcours ; et
- un dispositif de commande (125) destiné à commander une ou plusieurs actions ;
et le dispositif de commande étant conçu pour mettre en œuvre un procédé selon l'une des revendications 1 à 11.
